# EUROPÄISCHE PATENTANMELDUNG

(11) **EP 4 344 962 A1**
(43) Veröffentlichungstag der Anmeldung: **03.04.2024**
(21) Anmeldenummer: 23000128.1
(22) Anmeldetag: 25.09.2023
(51) Int. Cl.: B60R 19/40

(54) **STOSSFÄNGERSYSTEM FÜR FAHRZEUGE**

(30) Priorität: 26.09.2022 DE 202022002119 U
(71) Anmelder: Seibert, Heinz, 21524 Brunstorf (DE)
(72) Erfinder: Seibert, Heinz, 21524 Brunstorf (DE)
(74) Vertreter: Stephan, Henrik Hans Wilhelm

(57) **Zusammenfassung**

Die Erfindung betrifft ein Stoßfängersystem für Fahrzeuge sowie ein Kraftfahrzeug mit wenigstens ein Stoßfängersystem gemäß einem der Ansprüche 1 bis 9.

Es ist vorgesehen, dass ein Stoßfängersystem (10) für Fahrzeuge bereitgestellt wird. Solch ein System (10) umfasst dabei eine Stoßfängereinheit (14) mit einer Bewegungseinrichtung (16) und eine mit der Bewegungseinrichtung (16) gekoppelten Sensorvorrichtung (22) zur Detektion von crashrelevanten Gefahrensituationen für das Fahrzeug. Die Stoßfängereinheit (14) ist mittels der Bewegungseinrichtung (16) bewegbar. Die Bewegungseinrichtung (16) umfasst hierzu eine vorspannbare Federeinheit (18) und ein Vorspannhalteelement (20). Im Ausgangszustand ist die Stoßfängereinheit (14) ortsfest am Fahrzeug positioniert. Im Falle einer crashrelevanten Gefahrensituation für das Fahrzeug ist sie jedoch aufgrund der Funktionalität des Systems (10) in wenigstens eine Funktionsposition überführbar.

## Beschreibung

Die Erfindung betrifft ein Stoßfängersystem für Fahrzeuge sowie ein Kraftfahrzeug mit wenigstens einem Stoßfängersystem gemäß einem der Ansprüche 1 bis 9.

Es besteht nach wie vor ein großes Interesse daran, Fahrzeuge während ihrer unterschiedlichen Nutzungsszenarien für die Fahrzeuginsassen und für die Sicherheit von weiteren Verkehrsteilnehmern sicher auszugestalten. In diesem Zuge sind bereits zahlreiche Fahrzeugsicherheitssysteme in der Vergangenheit entwickelt worden. Ein Fokus lag dabei unter anderem auf Sicherheitssysteme, welche im Falle von ungewollten Kollisionen zwischen zwei Fahrzeugen oder einem Fahrzeug mit einem Hindernis einen zumindest partiellen Schutz für die Fahrzeuginsassen in der Fahrzeugkabine bieten. Die auftretenden Kräfte bei Kollisionen werden dabei entweder umgeleitet oder in entsprechende Verformungsarbeit umgewandelt, sodass betroffene Fahrzeuginsassen oder beteiligte Verkehrsteilnehmer möglichst unverletzt ein derartiges Ereignis überstehen. Neben für diese Zwecke ausgebildete Fahrzeugkarosserien sind insbesondere im Fahrzeuginnenraum bereits verschiedene Schutzausrüstungen, beispielsweise in Form von Airbagsystemen und dergleichen, bekannt. Bevor jedoch die Fahrzeugkarosserie in definierter Weise verformt wird, stellen die am Fahrzeug vorgesehenen Stoßfänger bereits einen ersten Schutz dar. Auftretende Kollisionskräfte werden dabei von den Stoßfängern aufgenommen. In einfacher Ausführungsform sind solche Stoßfänger heutzutage meist aus Kunststoffen ausgebildete Schutzkörper, die nach einer Kollision irreversibel zerstört sind. Bei leichten Kollisionen bieten sie den Vorteil, dass bereits ein einfacher Austausch dieser Komponenten das Fahrzeug wiederum in einen sicheren und nutzbaren Zustand überführt Weiterentwickelte Konzepte von Stoßfängern sehen bereits komplexere Systeme vor. Die Stoßfänger sind demnach als aktive Komponenten ausgestaltet. Beispielsweise sind in einem Kollisionsszenario diese dann in Bezug auf ihre Einbaulage neu positionierbar, wobei entsprechende Sensorvorrichtungen einen Auslösevorgang bewirken.

Aus dem Stand der Technik sind bereits Lösungen bekannt, welche sich im weitesten Sinne mit dieser Thematik beschäftigen. Nachfolgend werden zwei Dokumente aus dem Stand der Technik stellvertretend näher vorgestellt.

So ist aus der Druckschrift DE 100 20 660 A1 ein Fahrzeug, insbesondere ein Kraftfahrzeug, mit einer crashaktiven Fahrzeugfrontstruktur als bekannt zu entnehmen. Das vorgestellte Konzept betrifft dabei ein Fahrzeug mit einer crashaktiven Fahrzeugfrontstruktur, die bei einer mittels einer Sensorvorrichtung sensierten, drohenden Kollision mit dem Fahrzeug noch vor der Kollision mittels einer Verlagerungseinrichtung aus einer Grundstellung in Richtung vom Fahrzeug weg in eine Funktionsstellung verlagerbar ist. Es ist ferner vorgesehen, dass die Fahrzeugstruktur als großflächige, aufprallweiche und energieabsorbierende Softnose ausgebildet ist. Die Verlagerungseinrichtung gibt bei in die Funktionsstellung verlagerter Fahrzeugfrontstruktur in Abhängigkeit von einer Aufprallkraft kraftbegrenzt nach, dergestalt, dass die Fahrzeugfrontstruktur für eine kontrollierte Energieabsorption mit gezielter Kraft-Weg-Kennung in Richtung zum Fahrzeug hin zurückverlagerbar ist.

Aus der Druckschrift EP 0 589 227 A1 ist zudem eine Aufprallschutzvorrichtung an Fahrzeugen als bekannt zu entnehmen. Das vorgestellte Konzept bezieht sich dabei auf eine Aufprallschutzvorrichtung an Nutzfahrzeugen mit einer in der Ebene von Pkw-Stoßstangen angeordneten, energieaufnehmende Vorrichtung, die auch zur seitlichen Ableitung von auffahrenden Personenkraftwagen ausgelegt sein kann. Die energieaufnehmende Vorrichtung ist beim Überschreiten einer bestimmten Grenzgeschwindigkeit in einen höheren Geschwindigkeitsbereich aus einer inneren, unterhalb der Fahrerhausfront und parallel zu ihr angeordneten Position automatisch in eine um eine zulässige Deformationszone in Fahrtrichtung vorgeschobene Position ausfahrbar.

Die Lösungen gemäß dem vorgestellten Stand der Technik bieten zwar erste Ansätze, sind aber insgesamt noch nicht so ausgelegt, dass sie in jeglichen Anwendungsszenarien zuverlässig funktionieren. Auch besteht generell stetig ein Bedarf an Fahrzeugsystemen, die materialsparend und einfach zu warten sind, sodass insbesondere für zukünftige Fahrzeuggenerationen eine nachhaltige Produktionsweise und anschließend eine entsprechend nachhaltige Nutzungsphase mit letztendlich vorteilhafter Demontage gewährleistet wird. Insbesondere für Nutzfahrzeuge, die mitunter auch abseits von befestigten Verkehrswegen eingesetzt werden, sind derartige Systeme so auszulegen, dass sie auch nach extremen Fahrszenarien zuverlässig funktionieren.

Der Erfindung liegt nun die Aufgabe zugrunde, ein alternatives Stoßfängersystem für Fahrzeuge bereitzustellen, das eine besonders zuverlässige Funktionalität aufweist und zudem wartungsarm ist.

Diese Aufgabe wird mit den Merkmalen des Anspruchs 1 gelöst.

In bevorzugter Ausgestaltung der Erfindung ist vorgesehen, dass ein Stoßfängersystem für Fahrzeuge bereitgestellt wird. Solch ein System umfasst dabei eine Stoßfängereinheit mit einer Bewegungseinrichtung, wobei die Stoßfängereinheit mittels der Bewegungseinrichtung von einer Ausgangsposition in wenigstens eine Funktionsposition bewegbar ist. Zudem umfasst dieses System eine mit der Bewegungseinrichtung gekoppelten Sensorvorrichtung zur Detektion von crashrelevanten Gefahrensituationen für das Fahrzeug. Die Bewegungseinrichtung umfasst dabei wenigstens eine vorspannbare Federeinheit und wenigstens ein Vorspannhalteelement, sodass die Stoßfängereinheit in einem vorgespannten Zustand der Bewegungseinrichtung ortsfest an dem Fahrzeug positionierbar ist, wobei das wenigstens eine Vorspannhalteelemente mittels der Sensorvorrichtung im Falle einer crashrelevanten Gefahrensituation für das Fahrzeug auslösbar vorgesehen ist, sodass die Stoßfängereinheit mittels der aus dem vorgespannten Zustand in einen losgelösten Zustand überführten Bewegungseinrichtung definiert in die wenigstens eine Funktionsposition überführbar ist. Auf diese Weise ist es möglich, ein alternatives Stoßfängersystem für Fahrzeuge bereitzustellen, das eine besonders zuverlässige Funktionalität aufweist und zudem wartungsarm ist. Für einen Fachmann, der sich in dem Fachgebiet der Stoßfängersysteme auskennt, ist sofort ersichtlich, dass das vorgestellte Stoßfängersystem verschiedene Vorteile bietet, die nachfolgend näher vorgestellt werden. Die Möglichkeit einer Positionsverlagerung der Stoßfängereinheit in zumindest eine Funktionsposition bietet den Vorteil, dass die Stoßfängereinheit die während einer crashrelevanten Gefahrensituationen für das Fahrzeug auftretenden Kräfte gezielter aufnehmen kann und somit zumindest einen Teil von eingeleiteten Aufprallkräften bereits aufnehmen kann, bevor Zentralbereiche des Fahrzeugs betroffen sind. Hierfür bieten sich jeweils Funktionspositionen an, die sich durch eine bedarfsgerechte Beabstandung der Stoßfängereinheit von der Außenhaut des Fahrzeugs auszeichnen. Diese Re-Positionierung der Stoßfängereinheit ist aufgrund der Funktionalität des vorgestellten Systems nur im Bedarfsfall vorzunehmen. Erst bei entsprechender Aktivierung der Sensorvorrichtung ist es möglich, dass das wenigstens eine Vorspannhalteelement derart aktiviert wird, sodass die wenigstens eine vorspannbare Federeinheit ausgelöst wird. Infolge der freigesetzten Federkräfte schnellt die Stoßfängereinheit dann von der Ausgangsposition in die wenigstens eine Funktionsposition, sodass eingeleitete Aufprallkräfte von dem Stoßfängersystem zumindest teilweise aufgenommen werden. Die wenigstens eine Federeinheit bietet in diesem Zusammenhang noch den weiteren Vorteil, dass sie auch während des gesamten Kollisionsvorgangs immer wieder auftretende Impulse aufgrund ihrer jeweiligen Beschaffenheit abfedern kann, sodass insgesamt eine zuverlässige Schutzwirkung der beteiligten Fahrzeuge und Personen gewährleistbar ist. Diese besondere Zuverlässigkeit des vorgestellten Systems resultiert daraus, dass die für die Re-Positionierung der Stoßfängereinheit vorgesehene Bewegungseinrichtung aus für diese Zwecke funktionell aufeinander abgestimmten Komponenten aufgebaut ist. Im Gegensatz zu anderen einfach vorgespannten Federeinheiten, ist die vorgesehene Bewegungseinrichtung somit besonders zuverlässig und einfach bedienbar ausgestaltet. Die Kopplung mit der Sensorvorrichtung bietet dabei den Vorteil, dass nur bedarfsgerechte Auslösevorgänge möglich sind, sodass eine Fehlfunktion des Systems von vornherein ausgeschlossen ist. Vorteilhaft ist das vorgestellte Stoßfängersystem etwa bei Auffahrunfällen. Ein Aufprall auf ein vorausfahrendes Fahrzeug kann aufgrund der vorgestellten Funktionalität abgemildert werden. Mit anderen Worten werden auf das auffahrende Fahrzeug einwirkende Kräfte infolge des Kollisionsvorgangs nicht ungehemmt weitergeleitet, sondern zumindest teilweise von dem System kompensiert und umgewandelt. Der Einsatz von vorgespannten Federeinheiten und hierzu passenden Vorspannhalteelementen bietet den Vorteil, dass diese Art der Umsetzung besonders robuste Ausführungen des Systems ermöglichen. Auch nach einer das Fahrzeug übermäßig beanspruchenden Geländefahrt abseits der befestigten Fahrbahn ist somit eine zuverlässige Funktion des vorgestellten Systems mit hoher Wahrscheinlichkeit zu erwarten. Weder die dabei in das Fahrzeug eingeleiteten Kräfte aufgrund der unebenen Bodenverhältnisse noch die Einwirkung von Spritzwasser und Schmutz beeinflussen ein derartig robustes System, sodass eine zuverlässige Funktionalität auch nach längerer Nutzungszeit gewährleistbar ist. Die kompakte Bauweise des vorgestellten Systems bietet zudem den Vorteil, dass Wartungsvorgänge, insbesondere Austauschvorgänge einzelner Komponenten, mit einem überschaubaren Arbeits- und Materialaufwand durchführbar sind. Die Sensorvorrichtung kann dabei in den für den Fachmann bekannten Ausprägungen ausgebildet sein, sodass im Falle einer crashrelevanten Gefahrensituation für das Fahrzeug eine entsprechende Auslöseinformation an das wenigstens eine Vorspannhalteelemente übertragbar ist.

In weiterer bevorzugter Ausgestaltung der Erfindung ist vorgesehen, dass ein Kraftfahrzeug bereitgestellt wird, das wenigstens ein Stoßfängersystem gemäß einem der Ansprüche 1 bis 10 umfasst. Die zuvor genannten Vorteile gelten, soweit übertragbar, auch für das vorgestellte Kraftfahrzeug.

Weitere bevorzugte Ausgestaltungen der Erfindung ergeben sich aus den übrigen, in den Unteransprüchen genannten Merkmalen.

In einer weiteren bevorzugten Ausgestaltung der Erfindung ist vorgesehen, dass die Sensorvorrichtung wenigstens ein Sensorelement umfasst, welches ausgelegt ist, wenigstens einen Außenbereich des Fahrzeugs zu erfassen, sodass crashrelevante Hindernisse mittels der Sensorvorrichtung bereits vor einem Aufprall des Fahrzeugs mit dem Hindernis detektierbar sind. Derartige Sensorelemente können etwa basierend auf bildverarbeiteten Komponenten aufgebaut sein. Aber auch klassische Abstandstechnologien, umfassend LIDAR-Sensoren und dergleichen, sind vorstellbar. Die Außenbereiche des Fahrzeugs können sich dabei lediglich auf vor und hinter dem Fahrzeug befindliche Bereiche beschränken. Vorstellbar ist jedoch auch, dass für diese Zwecke speziell ausgebildete Sensorelemente auch Bereiche über und unter dem Fahrzeug entsprechend erfassen, sodass jegliche Gefahrenquellen, die zu einer crashrelevanten Gefahrensituationen für das Fahrzeug führen können, rechtzeitig und zuverlässig mittels der Sensorvorrichtung detektierbar sind. Vorstellbar ist auch, dass zwei unterschiedliche Sensorelemente vorgesehen sind, wobei die Sensorvorrichtung die jeweils erhaltenen Informationsflüsse derart auswertet, sodass eine Fehlinterpretation und somit eine nicht bedarfsgerechte Auslöseoperation des Systems zuverlässig vermeidbar ist.

In einer weiteren bevorzugten Ausgestaltung der Erfindung ist vorgesehen, dass die Sensorvorrichtung zusätzlich manuell bedienbar ist. Das vorgestellte System wird insofern permanent unter Spannung gehalten. Im Falle eines bevorstehenden Aufpralls kann diese Spannung mittels eines einfach, gegebenenfalls auch intuitiv, zu bedienenden Funktionselements oder durch eine Indikation, die etwa bei einer Vollbremsung manuell ausgelöst wird, gelöst werden, mit der Folge, dass die Stoßfängereinheit, welche etwa zumindest teilweise als klassische Stoßstange ausgebildet sein kann, aus ihrer Halterung oder allgemein aus ihrer Ausgangsposition nach vorne schnellt und damit die Wucht des Aufpralls abfängt. Die Sensorvorrichtung ist prinzipiell ausgelegt, automatisch im Zuge ihres zuvor aktivierten Zustands crashrelevante Gefahrensituationen für das Fahrzeug zu erkennen und entsprechend den Auslösevorgang des wenigstens einen Vorspannhalteelements zu bewirken. Jedoch ist es in dieser vorgestellten Ausführung der vorliegenden Erfindung zusätzlich möglich, dass die Sensorvorrichtung manuell bedienbar ist, mit der Folge, dass dadurch gleichfalls ein Auslösevorgang des wenigstens einen Vorspannhalteelements bewirkbar ist. Hierdurch ist es vorteilhaft möglich, dass etwa ein Fahrer eines Fahrzeugs, welches mit dem vorgestellten System ausgestattet ist, bereits vor der automatischen Erkennungsroutine manuell das System so bedient, sodass die Stoßfängereinheit in die wenigstens eine Funktionsposition überführbar ist.

Auch ist in einer weiteren Ausgestaltung der Erfindung vorgesehen, dass das wenigstens eine Vorspannhalteelement manuell auslösbar vorgesehen ist. Vorteilhaft ist es somit möglich, eine unmittelbare Überführung der Stoßfängereinheit in wenigstens eine Funktionsposition herbei zu führen. Erkennt beispielsweise der Fahrer des Fahrzeugs, in welchem das vorgestellte System in einem aktivierten Zustand installiert ist, dass eine Kollision mit einem weiteren Fahrzeug oder einem Hindernis unausweichlich bevorsteht, kann er manuell das wenigstens eine Vorspannhalteelement auslösen und somit mittelbar eine Überführung der Stoßfängereinheit in wenigstens eine Funktionsposition bewirken. Dies ist insbesondere in den Fällen vorteilhaft, in welchen die auslösende Person diese Situation zeitlich früher als die Sensorvorrichtung bemerkt, sodass eine frühere Überführung der Stoßfängereinheit in die wenigstens eine Funktionsposition bewirkbar ist. Auf diese Weise kann die Reaktionszeit mitunter entscheidend verkürzt werden, sodass dann die Aufprallkräfte möglichst in großem Umfang durch das vorgestellte System aufnehmbar sind.

Ferner ist in einer weiteren Ausgestaltung der Erfindung vorgesehen, dass die wenigstens eine vorspannbare Federeinheit wenigstens eine Feder, insbesondere wenigstens eine Feder umfassend eine Stahllegierung, oder eine gefederte Stoßdämpfereinheit umfasst. Federn sind besonders vorteilhaft für das vorgestellte System, da sie nach einem Auslösevorgang einfach wieder in den vorgespannten Vorgang überführbar sind. Das System ist in diesem Sinne dann besonders einfach und zuverlässig zu bedienen. Je nach Einsatzfeld sind zudem jeweilige Arten von Federn mit gesonderten Eigenschaften einfach in das vorgestellte System integrierbar, sodass mit einfachen Handgriffen eine bedarfsgerechte Anpassung des Systems herbeiführbar ist. Auch bietet der Einsatz von Federn eine wartungsarme Handhabung des vorgestellten Systems. Zudem sind Federn leicht hinsichtlich ihrer Funktionalität und Zuverlässigkeit überprüfbar, sodass stets ein zuverlässiges System mit überschaubarem Aufwand bereitstellbar ist. Der Einsatz von gefederten Stoßdämpfereinheiten bietet den Vorteil, dass mitunter auch größere Kräfte zuverlässig zumindest teilweise von dem System auffangbar sind. Auch bietet der Einsatz von gefederten Stoßdämpfereinheiten eine wartungsarme Handhabung des vorgestellten Systems. Zudem sind gefederte Stoßdämpfereinheiten leicht hinsichtlich ihrer Funktionalität und Zuverlässigkeit überprüfbar, sodass stets ein zuverlässiges System mit überschaubarem Aufwand bereitstellbar ist.

In einer weiteren bevorzugten Ausgestaltung der Erfindung ist vorgesehen, dass die Stoßfängereinheit eine Frontstoßfängereinheit für Fahrzeuge, insbesondere Kraftnutzfahrzeuge, umfasst. Vorteilhaft ist somit ein Einsatz für die Fälle möglich, in denen das Fahrzeug, in welchem das vorgestellte System vorgesehen ist, auf ein anderes Fahrzeug oder Hindernis auffährt. Das ausgelöste System nimmt somit die Aufprallkräfte auf und federt den Auffahrunfall ab, sodass ein potentiell sich einstellender Schaden zumindest abgemildert wird. Auffahrunfälle unter Beteiligung von Lastkraftwagen und Sattelzugmaschinen enden für den auffahrenden Lastkraftwagenfahrer oder Sattelzugmaschinenfahrer und seinen etwaigen Beifahrer oft tödlich oder führen für diese zu schweren Verletzungen. Die Ursache hierfür liegt darin, dass Lastkraftwagen oder Sattelzugmaschinen zwar über breite Stoßstangen verfügen, die jedoch nicht im Stande sind, den Aufprall auf ein vorausfahrendes Fahrzeug abzumildern. Vielmehr geben diese die hierbei auf das auffahrende Fahrzeug einwirkenden Kräfte nahezu ungehemmt weiter. Mit dem vorgestellten System, insbesondere in dieser Ausführungsform, wird eine Lösung für dieses Problem bereitgestellt. Die Lösung dieses Problems liegt in der Konstruktion eines Stoßfängersystem für Fahrzeuge, das mittels Federn oder Stoßdämpfern permanent unter Spannung gehalten wird. Im Falle eines bevorstehenden Aufpralls kann diese Spannung mittels eines einfach, gegebenenfalls intuitiv zu bedienenden Funktionselements, oder durch eine Indikation, die bei Vollbremsung manuell ausgelöst wird, gelöst werden, mit der Folge, dass die Stoßfängereinheit mit der Frontstoßfängereinheit für Fahrzeuge aus ihrer Halterung oder allgemein aus ihrer Ausgangsposition nach vorne schnellt, also von dem Fahrzeug sich entfernt, und damit die Wucht des Aufpralls abfängt. Mit anderen Worten erfolgt eine Auslösung des wenigstens einen Vorspannhalteelements mittels der Sensorvorrichtung oder manuell, sodass die wenigstens eine vorspannbare Federeinheit gemäß ihrer Federkraft nach vorne, also sich von dem Fahrzeug entfernend, entspannt, sodass die Stoßfängereinheit mit der Frontstoßfängereinheit für Fahrzeuge nach vorne, also sich von dem Fahrzeug entfernend, in die wenigstens eine Funktionsposition überführt wird. Als Resultat steht die Stoßfängereinheit mit der Frontstoßfängereinheit für Fahrzeuge je nach eingesetzten Federeinheiten von dem Fahrzeug ab. Die Stoßfängereinheit, welche sich in der wenigstens einen Funktionsposition befindet, trifft auf das Vorderfahrzeug oder allgemein auf ein Hindernis und fängt somit einwirkende Aufprallkräfte zumindest teilweise auf, sodass sowohl das auffahrende Fahrzeug als auch das vordere Fahrzeug möglichst wenig beschädigt werden und zusätzlich jeweilige Fahrzeuginsassen bestmöglich geschützt sind.

Zudem ist in einer weiteren Ausgestaltung der Erfindung vorgesehen, dass die Stoßfängereinheit eine Heckstoßfängereinheit für Fahrzeuge, insbesondere Kraftnutzfahrzeuge, umfasst. Die zuvor genannten Vorteile gelten, soweit übertragbar, auch für diese Ausführungsform.

Ferner ist in einer weiteren Ausgestaltung der Erfindung vorgesehen, dass das wenigstens eine vorspannbare Federelement austauschbar in dem Stoßfängersystem einbaubar ist. Auf diese Weise wird ein wartungsarmes System vorteilhaft ermöglicht. Der modulare Aufbau des Systems mit einfach austauschbaren Komponenten bietet zudem den Vorteil, dass das vorgestellte Stoßfängersystem für Fahrzeuge auch nach einem Einbau in einem Fahrzeug jederzeit leicht gewartet werden kann. Auch ist es auf diese Weise vorteilhaft möglich, das vorgestellte System für jeweilige Anwendungsszenarien anzupassen. Soll beispielsweise ein gewisser Mindestabstand der Stoßfängereinheit in der wenigstens einen Funktionsposition erreicht werden, so kann eine entsprechend ausgelegte Bewegungseinrichtung dadurch bereitgestellt werden, indem die jeweiligen Komponenten mit hierfür ausgelegten Eigenschaften vorgesehen werden.

Auch ist in einer weiteren Ausgestaltung der Erfindung vorgesehen, dass das wenigstens eine Vorspannhalteelemente ausgelegt ist, die vorgespannte Federkraft der wenigstens einen vorspannbaren Federeinheit sequentiell in Abhängigkeit einer Berechnung einer mit der Sensorvorrichtung gekoppelten Auswerteeinheit mit Auswerteprogramm freizugeben, sodass sequentiell zumindest temporär mehr als eine Funktionsposition bedarfsgerecht erreichbar ist. Diese Ausführungsvariante des vorgestellten Systems bietet den Vorteil, dass eine Abmilderung der Kollisionsschäden noch gezielter erreichbar ist. So ist etwa vorstellbar, dass die Federkraft der vorgespannten Federeinheit zunächst nur bis zur Hälfte durch das wenigstens eine Vorspannhalteelemente freigegeben wird, sodass eine erste Funktionsposition noch vor der Kollision erreichbar ist. Im zeitlichen Verlauf der Kollision kann dann gezielt eine Freigabe der restlichen Federkraft sequentiell in Abhängigkeit der Berechnung der mit der Sensorvorrichtung gekoppelten Auswerteeinheit mit Auswerteprogramm erfolgen. Sequentiell bedeutet in diesem Sinne eine zeitlich aufeinander folgende Reihenfolge der jeweiligen Freigaben. Die Auswerteeinheit mit Auswerteprogramm ist hierfür ausgelegt, zahlreiche mit der Kollision in Verbindung stehende Parameter zu erfassen und in Echtzeit auszuwerten. Es ist vorstellbar, dass in diesem Zuge auch eine künstliche Intelligenz eingesetzt wird. Es ist beispielsweise vorstellbar, dass das Auswerteprogramm in Echtzeit via Funkübertragung mit einer künstlichen Intelligenz verbindbar ist, sodass jeweils aktuelle Erkenntnisse ohne große Wartungsarbeiten stets dem vorgestellten System zur Verfügung stehen. Eine künstliche Intelligenz kann beispielsweise die Erkenntnisse von zahlreichen gespeicherten Kollisionsszenarien und deren Abläufen hinsichtlich eines Schadenspotenzials umfassen. Die während der Kollision aufgenommenen Parameter sind dann etwa in einer abgleichenden Routine derart auswertbar, sodass eine bestmögliche Reihenfolge der jeweiligen Freigaben der Federkraft erfolgt. Bestmöglich bedeutet in diesem Fall, dass das System den mit der Kollision eintretenden Schaden minimiert, sodass ein maximaler Schutz für die involvierten Fahrzeuge und Personen erreichbar ist.

Schlussendlich ist in einer weiteren Ausgestaltung der Erfindung vorgesehen, dass das wenigstens eine vorspannbare Federelement und das wenigstens eine Vorspannhalteelement in Form einer mechanischen Funktionseinheit oder einer mechatronischen Funktionseinheit ausgebildet sind. Die zuvor genannten Vorteile gelten, soweit übertragbar, auch für diese Ausführungsform.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Seitenansicht auf ein Stoßfängersystem für Fahrzeuge in einem eingebauten Zustand;
- Figur 2: eine schematische Darstellung eines Stoßfängersystems für Fahrzeuge.

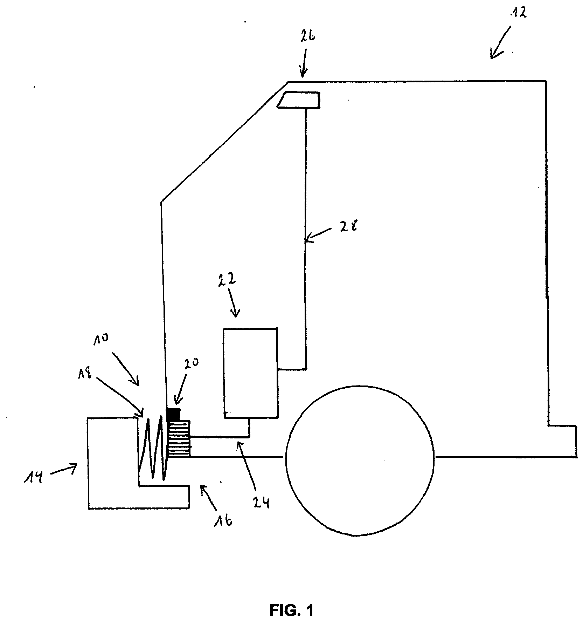

Figur 1 zeigt eine schematische Seitenansicht auf ein Stoßfängersystem 10 für Fahrzeuge in einem eingebauten Zustand. Das Fahrzeug ist in diesem Fall ein Zugfahrzeug 12. Das Zugfahrzeug 12 ist stark vereinfacht dargestellt. Die Positionierung und Dimensionierung des dargestellten Stoßfängersystem 10 ist lediglich beispielhaft dargestellt und ein Fachmann, welcher sich auf dem Gebiet der Kraftnutzfahrzeuge auskennt, verfügt über ausreichendes Fachwissen, um alternative Anordnungen ausgehend von Figur 1 abzuleiten. Das Stoßfängersystem 10 ist dabei mit einer Stoßfängereinheit 14 dargestellt. Die Stoßfängereinheit 14 ist in diesem Fall insbesondere eine Frontstoßfängereinheit und ist dementsprechend in einem vorderen Bereich des Zugfahrzeugs 12 vorgesehen. Die Stoßfängereinheit 14 ist dabei mit einer Bewegungseinrichtung 16 dargestellt. Die Stoßfängereinheit 14 ist mittels der Bewegungseinrichtung 16 von einer Ausgangsposition in wenigstens eine Funktionsposition bewegbar. In der Figur 1 befindet sich die Stoßfängereinheit in einer möglichen Funktionsposition. Diese Funktionsposition zeichnet sich dadurch aus, dass die Stoßfängereinheit 14 beabstandet von einer Außenhaut des Zugfahrzeugs 12 positioniert ist. Die Bewegungseinrichtung 16 ist mit einer zugehörigen vorspannbaren Federeinheit 18 und einem Vorspannhalteelement 20 dargestellt, wobei das Vorspannhalteelement 20 als mechatronische Funktionseinheit dargestellt ist.
In einer nicht näher dargestellten Ausführungsvariante ist es jedoch vorstellbar, dass mehr als eine vorspannbare Federeinheit 18 und mehr als ein Vorspannhalteelement 20 vorgesehen sind. Beispielsweise ist es vorstellbar, dass jeweils zwei derartige Komponenten vorgesehen sind, welche im Wesentlichen jeweils in seitlichen Bereichen eines Frontbereiches des Zugfahrzeugs 12 positioniert sind. Beispielsweise sind die erste Federeinheit 18 und das erste Vorspannhalteelement 20 dann in einem linken Bereich des Zugfahrzeugs 12 und die jeweils zweiten Komponenten dann in einem rechten Bereich des Zugfahrzeugs 12 vorgesehen. Auch sind Ausführungsvarianten vorstellbar, in welchen jeweils drei, vier oder sogar fünf derartige Komponenten vorgesehen sind. Der Vorteil einer Vielzahl von Federeinheiten 18 und funktional mit diesen jeweils verbundenen Vorspannelementen 20 besteht beispielsweise darin, dass größere Aufprallkräfte von dem vorgestellten System 10 aufnehmbar sind, sodass eine Begrenzung von Kollisionsschäden noch besser erreichbar ist. Auch ist vorstellbar, dass die Federeinheiten 18 unterschiedliche Federkräfte aufweisen, sodass bereichsweise unterschiedliche Funktionspositionen der Stoßfängereinheit 14 realisierbar sind. Mit anderen Worten erfolgt dann anstatt einer standardmäßig vorgesehenen gleichförmigen Vorwärtsbewegung der Stoßfängereinheit 14 eine bereichsweise unterschiedliche Vorwärtsbewegung der Stoßfängereinheit 14, sodass eine schräg von der Außenhaut abstehende Stoßfängereinheit 14 letztendlich bewirkbar ist. Beispielsweise ist dann der weiter vorstehende Bereich der Stoßfängereinheit 14 ausgelegt, ein Hindernis oder ein Fahrzeug, welches sich überwiegend in diesem Bereich befindet, und die mit diesem Hindernis oder Fahrzeug einhergehenden Aufprallkräften während einer Kollision besonders effektiv aufzunehmen. In diesem Zusammenhang ist es auch vorstellbar, dass unterschiedliche Ausprägungen von Federeinheiten 18 vorgesehen sind. Beispielsweise können in den im Wesentlichen außenliegenden Bereich der Stoßfängereinheit 14 besonders starke Federeinheiten mit größeren sich einstellenden Federkräften in einem vorgespannten Zustand vorgesehen werden, wobei Auslösevorgänge bei den zugehörigen Vorspannelementen 20 etwa zeitversetzt vorgesehen werden, sodass eine bedarfsgerechte Ausprägung der resultierenden Funktionspositionen bewirkbar ist. In einem Basisszenario ist jedoch vorgesehen, dass die Stoßfängereinheit 14 im Wesentlichen von einer Ausgangsposition in wenigstens eine Funktionsposition mittels der Bewegungseinrichtung 16 überführbar ist, wobei die wenigstens eine Funktionsposition sich dadurch auszeichnet, dass die Stoßfängereinheit 14 mit einer Längsachse jeweils im Wesentlichen parallel zur jeweils anderen Position vorgesehen ist. Mit anderen Worten wird die Stoßfängereinheit 14 über ihre gesamte Breite nach vorne bewegt, sodass bei Erreichung der wenigstens einen Funktionsposition eine parallel zur vorderen Außenhaut des Zugfahrzeugs 12 resultierende Position bewirkbar ist. Auf diese Weise trifft dann das Zugfahrzeug 12 bei einem Auffahrunfall mit einem Vorderfahrzeug oder einer frontalen Kollision mit einem sich vor dem Zugfahrzeug befindlichen Hindernis mit der im vorderen Bereich vorgesehenen Stoßfängereinheit 14 im Wesentlichen gleichmäßig auf entsprechende Materialien des Vorderfahrzeugs oder Hindernisses. Besonders effektiv ist das vorgestellte System 10 dann, wenn sich die jeweils kollidierenden Fahrzeuge dadurch auszeichnen, dass Sicherheitssysteme, beispielsweise in Form des vorgestellten Systems 10, in etwa in identischer Höhe vorgesehen sind. Wenn beispielsweise hintere und vordere Stoßfängereinheiten, welche allgemein auch als Stoßstangen bezeichnet werden können, in etwa identische Höhe und Breite aufweisen, was etwa durch entsprechende Normung zu erzielen ist, können auftretende Aufprallkräfte bei beiden kollidierenden Fahrzeugen gezielt aufgenommen werden, sodass infolgedessen Aufprallschäden an den jeweiligen Kernbereichen der kollidierenden Fahrzeuge abgemildert oder sogar gänzlich vermeidbar sind. Es ist allgemein festzuhalten, dass das vorgestellte System in seinen jeweiligen Ausführungsvarianten stets ausgelegt ist, die Intensität der Personen- und Sachschäden bei Auffahrunfällen von etwa Lastkraftwagen und Sattelzugmaschinen erheblich zu reduzieren.
In einer nicht näher dargestellten Ausführungsvariante ist es vorstellbar, dass die Vorspannhalteelemente 20 alternativ als rein mechanische Elemente vorgesehen sind, welche sowohl mittels der oben beschriebenen automatischen Auslösefunktion des Systems 10 als auch rein manuell auslösbar vorgesehen sein können. In der Figur 1 ist das dargestellte Vorspannhalteelement 20 als mechatronische Funktionseinheit vorgesehen, wobei es mit einer Sensorvorrichtung 22 zur Detektion von crashrelevanten Gefahrensituationen für das Fahrzeug, sprich für das Zugfahrzeug 12, gekoppelt dargestellt ist. Das wenigstens eine Vorspannhalteelemente 20 ist dabei mittels der Sensorvorrichtung 22 im Falle einer crashrelevanten Gefahrensituation für das Zugfahrzeug 12 auslösbar vorgesehen, sodass die Stoßfängereinheit 14 mittels der aus dem vorgespannten Zustand in einen losgelösten Zustand überführten Bewegungseinrichtung 16 definiert in die wenigstens eine Funktionsposition überführbar ist. In der Figur 1 ist die Kopplung mittels einer ersten Verbindungsleitung 24 dargestellt. In einer weiteren nicht näher dargestellten Ausführungsvariante ist es jedoch vorstellbar, das alternativ auch eine mittels Fernübertragungsmitteln realisierte Kopplung dieser Komponenten realisierbar ist. In der in Figur 1 dargestellten Ausführungsvariante ist die Sensorvorrichtung 22 zudem mit einem Sensorelement 26 gekoppelt dargestellt. Die Kopplung ist in diesem Fall mittels einer zweiten Verbindungsleitung 28 realisiert dargestellt. In einer weiteren nicht näher dargestellten Ausführungsvariante ist es jedoch vorstellbar, das alternativ auch eine mittels Femübertragungsmitteln realisierte Kopplung dieser Komponenten realisierbar ist. Das Sensorelement 26 ist dabei in einem im Wesentlichen oberen Bereich des Zugfahrzeugs 12 dargestellt. Insbesondere ist dieses Sensorelement 26 im Wesentlichen oberhalb einer nicht näher dargestellten Windschutzscheibe vorgesehen. Dieses Sensorelement 26 kann beispielsweise ein einfacher Abstandsmesser oder ein kamerabasiertes System sein. Alternativ ist vorstellbar, dass die dargestellte Sensorvorrichtung 22 auch ohne ein zusätzlich gekoppeltes Sensorelement 26 realisierbar ist. Es ist beispielsweise vorstellbar, dass die Sensorvorrichtung 22 dann über Mittel verfügt, mittels welcher eine drohende Kollision mit einem Fahrzeug oder einem Hindernis zuverlässig detektierbar ist. Beispielsweise weist die Sensorvorrichtung hierfür dann Mittel auf, die eine abrupte Geschwindigkeit des Zugfahrzeugs 12 detektieren, sodass infolgedessen dann eine Auslöseroutine automatisch ausführbar ist.

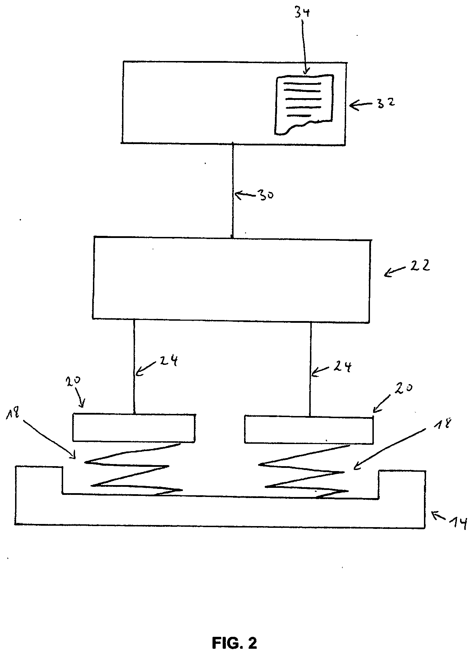

Figur 2 zeigt eine schematische Darstellung eines Stoßfängersystems 10 für Fahrzeuge. Das Stoßfängersystem 10 ist dabei mit einer Stoßfängereinheit 14 dargestellt. Bezogen auf die Bildebene ist oberhalb der Stoßfängereinheit 14 eine zugehörige Bewegungseinrichtung 16 dargestellt. Die Bewegungseinrichtung 16 ist mit zwei Federeinheiten 18 und zwei Vorspannelementen 20 dargestellt. Die zwei Vorspannelemente 20 sind dabei mit jeweiligen ersten Verbindungsleitungen 24 mit einer Sensorvorrichtung 22 zur Detektion von crashrelevanten Gefahrensituationen für das Fahrzeug gekoppelt dargestellt. Die Sensorvorrichtung 22 ist wiederum mittels einer dritten Verbindungsleitung 30 mit einer Auswerteeinheit 32 mit Auswerteprogramm 34 gekoppelt dargestellt. Die Stoßfängereinheit 14 ist mittels der Bewegungseinrichtung 16 von einer Ausgangsposition in wenigstens eine Funktionsposition bewegbar. Die mit der Bewegungseinrichtung 16 gekoppelte Sensorvorrichtung 16 zur Detektion von crashrelevanten Gefahrensituationen für das Fahrzeug kann in einer nicht näher dargestellten Ausführungsvariante auch über eine Funkverbindung oder dergleichen koppelbar vorgesehen sein. Die Bewegungseinrichtung 16 ist wie bereits erwähnt mit zwei vorspannbaren Federeinheiten 18 und zwei Vorspannhalteelementen 20 dargestellt. In einer nicht näher dargestellten Ausführungsvariante ist jedoch vorstellbar, dass jeweils nur eine der jeweiligen Komponenten oder drei oder mehr als drei von diesen Komponenten vorgesehen werden. Die Stoßfängereinheit 14 ist in einem vorgespannten Zustand der Bewegungseinrichtung 16 ortsfest an einem Fahrzeug positionierbar, wobei die zwei Vorspannhalteelemente 20 mittels der Sensorvorrichtung 22 im Falle einer crashrelevanten Gefahrensituation für das Fahrzeug auslösbar vorgesehen sind, sodass die Stoßfängereinheit 14 mittels der aus dem vorgespannten Zustand in einen losgelösten Zustand überführten Bewegungseinrichtung 16 definiert in die wenigstens eine Funktionsposition überführbar ist. Die Vorspannhalteelemente 20 sind dabei ausgelegt, die jeweils vorgespannte Federkraft der zwei vorspannbaren Federeinheiten 18 sequentiell in Abhängigkeit einer Berechnung der mit der Sensorvorrichtung 22 gekoppelten Auswerteeinheit 32 mit Auswerteprogramm 34 freizugeben, sodass sequentiell zumindest temporär mehr als eine Funktionsposition bedarfsgerecht erreichbar ist. Das Auswerteprogramm 34 umfasst beispielsweise teilweise mit Komponenten einer künstlichen Intelligenz oder ist Komponenten einer künstlichen Intelligenz koppelbar vorgesehen.

### Bezugszeichenliste

- 10: Stoßfängersystem
- 12: Zugfahrzeug
- 14: Stoßfängereinheit
- 16: Bewegungseinrichtung
- 18: Federeinheit
- 20: Vorspannhalteelement
- 22: Sensorvorrichtung
- 24: erste Verbindungsleitung
- 26: Sensorelement
- 28: zweite Verbindungsleitung
- 30: dritte Verbindungsleitung
- 32: Auswerteeinheit
- 34: Auswerteprogramm

## Patentansprüche

1. Stoßfängersystem (10) für Fahrzeuge umfassend eine Stoßfängereinheit (14) mit einer Bewegungseinrichtung (16), wobei die Stoßfängereinheit (14) mittels der Bewegungseinrichtung (16) von einer Ausgangsposition in wenigstens eine Funktionsposition bewegbar ist, und eine mit der Bewegungseinrichtung (16) gekoppelten Sensorvorrichtung (22) zur Detektion von crashrelevanten Gefahrensituationen für das Fahrzeug, **dadurch gekennzeichnet, dass** die Bewegungseinrichtung (16) wenigstens eine vorspannbare Federeinheit (18) und wenigstens ein Vorspannhalteelement (20) umfasst, sodass die Stoßfängereinheit (14) in einem vorgespannten Zustand der Bewegungseinrichtung (16) ortsfest an dem Fahrzeug positionierbar ist, wobei das wenigstens eine Vorspannhalteelemente (20) mittels der Sensorvorrichtung (22) im Falle einer crashrelevanten Gefahrensituation für das Fahrzeug auslösbar vorgesehen ist, sodass die Stoßfängereinheit (14) mittels der aus dem vorgespannten Zustand in einen losgelösten Zustand überführten Bewegungseinrichtung (16) definiert in die wenigstens eine Funktionsposition überführbar ist.

2. Stoßfängersystem (10) gemäß Anspruch 1, wobei die Sensorvorrichtung (22) wenigstens ein Sensorelement (26) umfasst, welches ausgelegt ist, wenigstens einen Außenbereich des Fahrzeugs zu erfassen, sodass crashrelevante Hindernisse mittels der Sensorvorrichtung (22) bereits vor einem Aufprall des Fahrzeugs mit dem Hindernis detektierbar sind.

3. Stoßfängersystem (10) gemäß einem der vorherigen Ansprüche, wobei die Sensorvorrichtung (22) zusätzlich manuell bedienbar ist.

4. Stoßfängersystem (10) gemäß einem der vorherigen Ansprüche, wobei das wenigstens eine Vorspannhalteelement (20) manuell auslösbar vorgesehen ist.

5. Stoßfängersystem (10) gemäß einem der vorherigen Ansprüche, wobei die wenigstens eine vorspannbare Federeinheit (18) wenigstens eine Feder, insbesondere wenigstens eine Feder umfassend eine Stahllegierung, oder eine gefederte Stoßdämpfereinheit umfasst.

6. Stoßfängersystem (10) gemäß einem der vorherigen Ansprüche, wobei die Stoßfängereinheit (14) eine Frontstoßfängereinheit für Fahrzeuge, insbesondere Kraftnutzfahrzeuge, umfasst.

7. Stoßfängersystem (10) gemäß einem der vorherigen Ansprüche, wobei die Stoßfängereinheit (14) eine Heckstoßfängereinheit für Fahrzeuge, insbesondere Kraftnutzfahrzeuge, umfasst.

8. Stoßfängersystem (10) gemäß einem der vorherigen Ansprüche, wobei das wenigstens eine vorspannbare Federelement (18) austauschbar in dem Stoßfängersystem (10) einbaubar ist.

9. Stoßfängersystem (10) gemäß einem der vorherigen Ansprüche, wobei das wenigstens eine vorspannbare Federelement (18) und das wenigstens eine Vorspannhalteelement (20) in Form einer mechanischen Funktionseinheit oder einer mechatronischen Funktionseinheit ausgebildet sind.

10. Stoßfängersystem (10) gemäß einem der vorherigen Ansprüche, wobei das wenigstens eine Vorspannhalteelemente (20) ausgelegt ist, die vorgespannte Federkraft der wenigstens einen vorspannbaren Federeinheit (18) sequentiell in Abhängigkeit einer Berechnung einer mit der Sensorvorrichtung (22) gekoppelten Auswerteeinheit (32) mit Auswerteprogramm (34) freizugeben, sodass sequentiell zumindest temporär mehr als eine Funktionsposition bedarfsgerecht erreichbar ist.

11. Kraftfahrzeug umfassend wenigstens ein Stoßfängersystem (10) gemäß einem der Ansprüche 1 bis 10.
